# EUROPÄISCHE PATENTSCHRIFT

(11) **EP 3 147 116 B1**
(45) Veröffentlichungstag und Bekanntmachung des Hinweises auf die Patenterteilung: **02.01.2019**
(21) Anmeldenummer: 16189845.7
(22) Anmeldetag: 21.09.2016
(51) Int. Cl.: B31F 1/28

(54) **WELLPAPPEANLAGE**
CORRUGATED BOARD SYSTEM
MACHINE A CARTONS ONDULES

(30) Priorität: 24.09.2015 DE 102015218333
(43) Veröffentlichungstag der Anmeldung: 29.03.2017
(73) Patentinhaber: BHS Corrugated Maschinen- und Anlagenbau GmbH, 92729 Weiherhammer (DE)
(72) Erfinder: Mark, Maximilian, 95643 Tirschenreuth (DE); Gnan, Alfons, 92249 Vilseck (DE); Städele, Norbert, 92711 Parkstein (DE)
(74) Vertreter: Rau, Schneck & Hübner Patentanwälte Rechtsanwälte PartGmbB

(56) Entgegenhaltungen:
- DE-A1- 1 924 265
- JP-A- S5 952 655
- US-A1- 2006 148 631

## Beschreibung

Die vorliegende Patentanmeldung nimmt die Priorität der deutschen Patentanmeldung DE 10 2015 218 333.5 in Anspruch, deren Inhalt durch Bezugnahme hierin aufgenommen wird.

Die Erfindung betrifft eine Wellpappeanlage mit einer Wellpappe-Herstellungslinie zum Herstellen einer Wellpappebahn bzw. von Wellpappe gemäß dem Oberbegriff des Anspruchs 1.

Wellpappeanlagen sind aus dem Stand der Technik durch offenkundige Vorbenutzung allgemein bekannt. Der Stand der Technik offenbart auch Wellpappeanlagen mit integrierten Druckvorrichtungen zum Bedrucken einer Kaschierbahn der Wellpappebahn. Nachteilig an diesen bekannten Wellpappeanlagen ist oftmals, dass diese insgesamt eine enorme Länge haben. Insbesondere stromabwärts zu einer Kaschierbahn-Abrollvorrichtung ist im Allgemeinen ein erheblicher Platzbedarf zur Unterbringung der Druckvorrichtung erforderlich. Ferner ist die Druckqualität derartiger Wellpappeanlagen häufig nicht zufriedenstellend.

Aus der JP S59-52655 A ist eine gattungsgemäße Wellpappeanlage bekannt, bei der eine Druckbahn bedruckt wird. Die Druckbahn bildet eine Kaschierbahn bei der fertigen Wellpappe.

Aus der US 2006/0148631 A1 ist eine Wellpappeanlage mit einer Druckbahn-Abrollvorrichtung bekannt. Die Druckbahn wird über eine Druckstation zu einer Heiz- und Andrückvorrichtung gefördert und als Kaschierbahn benutzt.

Die DE 1 924 265 A offenbart eine Anlage mit einem einer Bahn zugeordneten Helioapparat, der eine Druckergruppe aufweist. Die bedruckte Bahn wird mit einer Bahn leimend verbunden, die durch eine Riffelvorrichtung geführt ist.

Der Erfindung liegt daher die Aufgabe zugrunde, eine eine Druckvorrichtung umfassende Wellpappeanlage zu schaffen, die eine vergleichsweise geringe Länge aufweist. Ferner soll die Druckqualität der Wellpappeanlage besonders hoch sein.

Diese Aufgabe wird erfindungsgemäß durch die in dem unabhängigen Anspruch 1 angegebenen Merkmale gelöst. Der Kern liegt darin, dass die Druckbahn-Drucklinie über die Druckbahn-Übergabeanordnung an die Wellpappe-Herstellungslinie angeschlossen ist. Die einseitig kaschierte Wellpappebahn ist mit der Kaschierbahn der Wellpappe-Herstellungslinie oder der Druckbahn, insbesondere mit Leim, verbindbar.

Die durch die Wellpappeanlage herstellbare Wellpappebahn kann außenseitig die Kaschierbahn der Wellpappe-Herstellungslinie oder die Druckbahn der Druckbahn-Drucklinie aufweisen, die dann die Kaschierbahn bildet.

Günstigerweise hat die Wellpappe-Herstellungslinie eine Verbindungsvorrichtung zum Verbinden der einseitig kaschierten Wellpappebahn mit der Kaschierbahn, die durch die Druckbahn aus der Druckbahn-Drucklinie oder durch die Kaschierbahn aus der Wellpappe-Herstellungslinie gebildet ist. Die Verbindungsvorrichtung ist vorzugsweise als Heiz- und Zugpartie bzw. Heiz-Andrückvorrichtung ausgeführt.

Es ist von Vorteil, wenn die Druckbahn-Drucklinie mindestens eine Fördereinrichtung zum Fördern der Druckbahn umfasst.

Günstigerweise hat die Druckbahn-Drucklinie eine Vorbeschichtungseinrichtung zum Vorbeschichten der zu bedruckenden Druckbahn.

Es ist zweckmäßig, wenn die Druckbahn-Drucklinie eine Corona-Vorbehandlungseinrichtung zum Vorbehandeln der zu bedruckenden Druckbahn umfasst.

Günstigerweise hat die Druckbahn-Drucklinie eine Lackiervorrichtung zum Überlackieren der bedruckten Druckbahn bzw. deren mindestens einen Druckbereichs.

Es ist von Vorteil, wenn die Druckbahn-Drucklinie mindestens eine Trocknungsvorrichtung zum Trocknen der Druckbahn umfasst. Günstigerweise erfolgt eine Trocknung der Vorbeschichtung, des mindestens einen Aufdrucks und/oder der Lackierung.

Die Druckvorrichtung ist hierbei vorteilhafterweise eine Digitaldruckvorrichtung, insbesondere eine Inkjetdruckeinrichtung. Andere bekannte Druckvorrichtungen sind alternativ einsetzbar. Die Aufstellung der Druckbahn-Drucklinie, in der eine Digitaldruckvorrichtung integriert ist, benachbart zur Wellpappenanlage ist sehr vorteilhaft, da die Digitaldruckvorrichtung ein sensibles Verhalten gegenüber Umgebungshitze, Vibrationen und Staubaufkommen aufweist. Die Zugänglichkeit der Digitaldruckeinrichtung, in etwa zur Reinigung von Bauteilen, wird zusätzlich wesentlich verbessert.

Die Druckvorrichtung ist insbesondere imstande, mindestens einen Buchstaben, eine Ziffer, ein anderes Zeichen, eine Grafik und/oder ein Foto auf die Druckbahn aufzudrucken. Dafür wird günstigerweise Farbe bzw. Tinte herangezogen. Die Druckbahn ist bzw. bleibt vorzugsweise eine glatte, ungewellte Bahn.

Günstigerweise ist die fertige Wellpappebahn eine dreilagige Wellpappebahn. Alternativ weist diese mehr als drei, insbesondere fünf oder sieben, Lagen auf.

Es ist von Vorteil, wenn die Deckbahn-Abrollvorrichtung als Splicevorrichtung zum Bereitstellen einer endlosen Deckbahn ausgeführt ist.

Günstigerweise ist die Materialbahn-Abrollvorrichtung als Splicevorrichtung zum Bereitstellen einer endlosen Materialbahn ausgebildet.

Die Vorrichtung zum Herstellen einer einseitig kaschierten Wellpappebahn umfasst vorzugsweise eine Riffeleinrichtung zum Riffeln der zu wellenden Materialbahn unter Bildung einer Wellbahn.

Günstigerweise ist die Kaschierbahn-Abrollvorrichtung als Splicevorrichtung zum Bereitstellen einer endlosen Kaschierbahn ausgebildet.

Es ist von Vorteil, wenn die Vorrichtung zum Herstellen einer einseitig kaschierten Wellpappebahn eine Leimauftragseinrichtung zum Beleimen der Wellbahn aufweist.

Es ist zweckmäßig, wenn die Vorrichtung zum Herstellen einer einseitig kaschierten Wellpappebahn außerdem eine Anpresseinrichtung zum Anpressen der Deckbahn gegen die mit Leim versehene Wellbahn umfasst.

Das Leimwerk hat vorzugsweise eine Leimauftragswalze zum Auftragen von Leim aus einem Leimbehälter auf die einseitig kaschierte Wellpappebahn bzw. deren Wellbahn.

Die hier verwendeten Ausdrücke "stromaufwärts", "stromabwärts", "nachgeordnet", "vorgeordnet" oder dergleichen beziehen sich insbesondere auf die jeweilige geförderte Bahn.

Weitere vorteilhafte Ausgestaltungen der Erfindung sind in den Unteransprüchen angegeben.

Die Anordnung der Druckbahn-Drucklinie und der Wellpappe-Herstellungslinie gemäß dem Unteranspruch 2 führt zu einer Wellpappeanlage, die eine vergleichsweise geringe Länge hat. Die Druckbahn-Drucklinie und die Wellpappe-Herstellungslinie sind in Bahn-Förderrichtung nebeneinander bzw. parallel zueinander angeordnet. Dies erlaubt im Allgemeinen einen einfachen Austausch einer herkömmlichen Wellpappeanlage durch die erfindungsgemäße Wellpappeanlage, da seitlich neben der Wellpappe-Herstellungslinie häufig noch Platz vorhanden ist. Eine einfache Nachrüstung einer bestehenden Wellpappeanlage ist außerdem gewährleistet.

Günstigerweise verläuft die Druckbahn-Drucklinie, insbesondere über ihre gesamte Länge, benachbart neben der Wellpappe-Herstellungslinie. Die Ausführungen zu dem Unteranspruch 2 gelten hier im Wesentlichen analog.

Es ist von Vorteil, wenn die Druckbahn-Drucklinie benachbart zu der Kaschier-Abrollvorrichtung, dem Leimwerk und/oder einer Vorheizanordnung zum Vorheizen von mindestens der einseitig kaschierten Wellpappebahn verläuft. Dies ist eine bevorzugte Anordnung der Druckbahn-Drucklinie zu der Wellpappe-Herstellungslinie.

Die Speichervorrichtung zur Speicherung der einseitig kaschierten Wellpappebahn gemäß dem Unteranspruch 4 erlaubt ein einfaches Zwischenspeichern und Puffern der einseitig kaschierten Wellpappebahn. Günstigerweise bildet dazu die einseitig kaschierte Wellpappebahn in der Speichervorrichtung mindestens eine Schleife, bevorzugter mehrere Schleifen, aus.

Durch die Anordnung gemäß dem Unteranspruch 5 sind Schwingungen zu dem Leimwerk bzw. einer Heiz- und Zugpartie reduzierbar.

Gemäß dem Unteranspruch 6 ist die Druckbahn-Übergabeanordnung vertikal über der Materialbahn-Abrollvorrichtung an die Wellpappe-Herstellungslinie angeschlossen. Sie ist in einer vertikalen Höhe beabstandet zu einem Untergrund, Boden, wie Hallenboden, oder dergleichen an die Wellpappe-Herstellungslinie angeschlossen. Die Druckbahn-Übergabeanordnung steht dort einem Maschinenbediener oder dergleichen nicht im Wege. Auch Flurförderzeuge können bei ausreichend beabstandeter vertikaler Höhe diesen Bereich unterfahren.

Verglichen mit der Ausgestaltung gemäß dem Unteranspruch 6 ist gemäß dem Unteranspruch 7 die Druckbahn-Übergabeanordnung tiefer an die Wellpappe-Herstellungslinie angeschlossen. Sie ist in einer vertikalen Höhe beabstandet zu einem Untergrund, Boden, wie Hallenboden, oder dergleichen an die Wellpappe-Herstellungslinie angeschlossen.

Alternativ ist die Druckbahn-Übergabeanordnung benachbart zu einem Untergrund an die Wellpappe-Herstellungslinie angeschlossen. Es ist von Vorteil, wenn die Druckbahn-Übergabeanordnung zumindest bereichsweise benachbart oberhalb des Untergrunds verläuft. Alternativ verläuft diese zumindest bereichsweise in dem Untergrund.

Die Druckbahn-Übergabeanordnung erstreckt sich gemäß dem Unteranspruch 8 günstigerweise zumindest bereichsweise im Wesentlichen senkrecht zu der Wellpappe-Herstellungslinie. Es ist von Vorteil, wenn sich die Druckbahn-Übergabeanordnung im Wesentlichen in ihrer Gesamtheit senkrecht zu der Wellpappe-Herstellungslinie erstreckt. Alternativ verläuft die Druckbahn-Übergabeanordnung schräg zu der Wellpappe-Herstellungslinie.

Die Druckbahn-Übergabeanordnung erstreckt sich günstigerweise zumindest bereichsweise im Wesentlichen senkrecht zu der Druckbahn-Drucklinie. Es ist zweckmäßig, wenn sich die Druckbahn-Übergabeanordnung im Wesentlichen in ihrer Gesamtheit im Wesentlichen senkrecht zu der Druckbahn-Drucklinie erstreckt. Eine schräge Anordnung der Druckbahn-Übergabeanordnung zu der Druckbahn-Drucklinie liegt alternativ vor.

Die Umlenkanordnung gemäß dem Unteranspruch 9 ist günstigerweise als Stangenanordnung ausgeführt. Die Umlenkanordnung ist imstande, die Druckbahn während ihrer Förderung umzulenken.

Es ist zweckmäßig, wenn die Druckbahn-Übergabeanordnung benachbart zu der Druckbahn-Drucklinie eine erste Umlenkeinrichtung zum Umlenken der Druckbahn zu der Wellpappe-Herstellungslinie umfasst, wobei die erste Umlenkeinrichtung vorzugsweise die Druckbahn um im Wesentlichen 90° umlenkt.

Die erste Umlenkeinrichtung ist günstigerweise als Umlenkstange ausgeführt, die schräg zu der Druckbahn-Drucklinie bzw. zu einer dort vorliegenden Förderrichtung der Druckbahn angeordnet ist. Günstigerweise schließt die Umlenkstange einen Winkel von 45° zu der Druckbahn-Drucklinie bzw. zu der dort vorliegenden Förderrichtung der Druckbahn ein. Die erste Umlenkeinrichtung wendet vorzugsweise die Druckbahn um etwa 180°.

Vorzugsweise umfasst die Druckbahn-Übergabeanordnung benachbart zu der Wellpappe-Herstellungslinie eine zweite Umlenkeinrichtung zum Umlenken der Druckbahn in Förderrichtung der einseitig kaschierten Wellpappebahn bei der Druckbahn-Übergabeanordnung, wobei die zweite Umlenkeinrichtung vorzugsweise die Druckbahn um im Wesentlichen 90° umlenkt.

Die zweite Umlenkeinrichtung ist günstigerweise als Umlenkstange ausgebildet, die schräg zu der Druckbahn-Übergabeanordnung bzw. zu der dort vorliegenden Förderrichtung der Druckbahn in der Druckbahn-Übergabeanordnung angeordnet ist. Die zweite Umlenkstange ist außerdem schräg zu der Wellpappe-Herstellungslinie bzw. zu der Förderrichtung der Wellpappebahn bei der Druckbahn-Übergabeanordnung angeordnet. Günstigerweise ist die zweite Umlenkstange in einem Winkel von 45° zu der Druckbahn-Übergabeanordnung bzw. der Förderrichtung der Druckbahn bei der Druckbahn-Übergabeanordnung bzw. zu der Wellpappe-Herstellungslinie bzw. der Förderrichtung der Wellpappebahn bei der Druckbahn-Übergabeanordnung angeordnet. Die zweite Umlenkeinrichtung wendet vorzugsweise die Druckbahn um etwa 180°. Die erste Umlenkstange und die zweite Umlenkstange liegen günstigerweise in parallel zueinander verlaufenden Ebenen. Da Druckeinrichtungen im Digitaldruckverfahren günstigerweise eine laufende Materialbahn von oben bedrucken und die Kaschierbahn mit der Druckseite nach unten zeigend mit der einseitigen Wellpappebahn verleimt wird, werden die Umlenkstangen idealerweise so umschlungen, dass durch die Umlenkeinrichtung zugleich ein passendes Umdrehen der Druckbahn erfolgt.

Es ist von Vorteil, wenn die Umlenkstangen nicht mit der Druckseite der Druckbahn umschlungen werden, um den Aufdruck nicht zu beschädigen. Alternativ können die Umlenkstangen eine Luftumspülung besitzen, durch die bei druckseitiger Umschlingung durch die reduzierten Scherkräfte keine Beschädigung des Aufdrucks zu erwarten ist.

Die Druckbahn-Speichervorrichtung gemäß dem Unteranspruch 10 erlaubt günstigerweise eine Zwischenspeicherung bzw. Pufferung der Druckbahn. Es ist von Vorteil, wenn die Druckbahn-Speichervorrichtung beispielsweise imstande ist, die Druckbahn zu speichern, wenn die Druckbahn nicht zur Bildung der Wellpappebahn, sondern die Kaschierbahn aus der Wellpappe-Herstellungslinie herangezogen wird. In der Druckbahn-Speichervorrichtung ist so die Druckbahn speicherbar.

Gemäß dem Unteranspruch 11 umfasst die Druckbahn-Speichervorrichtung eine Druckbahn-Aufwickeleinrichtung zum Aufwickeln der Druckbahn. Eine solche Druckbahn-Aufwickeleinrichtung ist imstande, eine sehr große Menge an Druckbahn aufzunehmen bzw. zu bevorraten.

Die dynamische Druckbahn-Speichereinrichtung gemäß dem Unteranspruch 12 hat verglichen mit der Druckbahn-Aufwickeleinrichtung eine wesentlich kleinere Speicherkapazität an Druckbahn. Dynamische Änderungen in der Abrollgeschwindigkeit der Druckbahn-Abrollvorrichtung sind durch die dynamische Druckbahn-Speichereinrichtung günstigerweise besonders gut ausgleichbar.

Die Druckbahn-Weichenanordnung gemäß dem Unteranspruch 13 erlaubt einen besonders flexiblen Einsatz der Druckbahn. Beispielsweise ist die Druckbahn auf Vorrat herstellbar und vorzugsweise durch die Druckbahn-Aufwickeleinrichtung speicherbar. Alternativ wird diese simultan zur Weiterverarbeitung in die Wellpappe-Herstellungslinie geleitet.

Es ist von Vorteil, wenn die Druckbahn-Abrollvorrichtung als Splicevorrichtung ausgeführt ist. Diese Ausgestaltung erlaubt die Herstellung einer endlosen Druckbahn, was eine unterbrechungsfreie Herstellung der Wellpappebahn mit der Druckbahn gewährleistet.

Die Ausgestaltung gemäß Unteranspruch 14 gewährleistet eine besonders funktionssichere und einfache Einführung der Druckbahn in die Wellpappe-Herstellungslinie. Durch die erste Spliceeinrichtung sind die erste Kaschierbahn und die zweite Kaschierbahn aneinander splicebar. Anders ausgedrückt ist die erste Kaschierbahn an eine endlose Kaschierbahn oder die zweite Kaschierbahn an die endlose Kaschierbahn splicebar. Durch die zweite Spliceeinrichtung ist die erste Druckbahn an die erste Kaschierbahn oder die zweiten Kaschierbahn splicebar. Anders ausgedrückt ist die Druckbahn an die endlose Kaschierbahn splicebar.

Nachfolgend werden unter Bezugnahme auf die beigefügte Zeichnung zwei bevorzugte Ausführungsformen der Erfindung beispielhaft beschrieben. Dabei zeigen:
- Fig. 1: eine schematische Draufsicht auf einen Teil einer erfindungsgemäßen Wellpappeanlage gemäß einer ersten Ausführungsform,
- Fig. 2: eine Seitenansicht der Wellpappe-Herstellungslinie der in Fig. 1 dargestellten Wellpappeanlage,
- Fig. 3: eine Seitenansicht der Druckbahn-Drucklinie der in Fig. 1 dargestellten Wellpappeanlage,
- Fig. 3a: einen Querschnitt durch eine die Druckbahn einschließende Wellpappebahn, die durch die in Fig. 1 veranschaulichte Wellpappeanlage hergestellt ist,
- Fig. 4: eine Ansicht der in Fig. 1 gezeigten Wellpappeanlage senkrecht zu der Förderrichtung der einseitig kaschierten Wellpappebahn bei der Druckbahn-Übergabevorrichtung, wobei die Ansicht die Übergabe der Druckbahn veranschaulicht,
- Fig. 5: eine schematische Draufsicht auf einen Teil einer erfindungsgemäßen Wellpappeanlage gemäß einer zweiten Ausführungsform,
- Fig. 6: eine Seitenansicht der Wellpappe-Herstellungslinie der in Fig. 5 dargestellten Wellpappeanlage, und
- Fig. 7: eine Fig. 4 entsprechende Ansicht der in Fig. 5 gezeigten Wellpappeanlage.

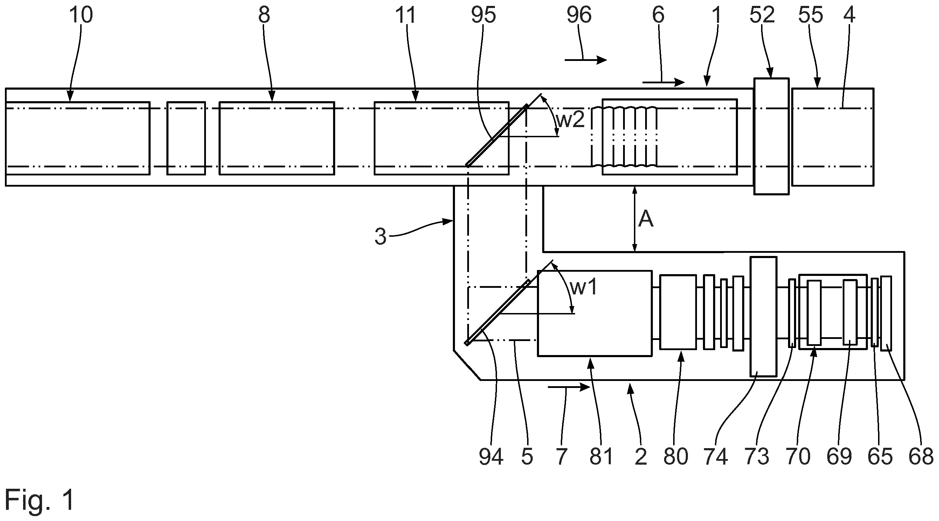

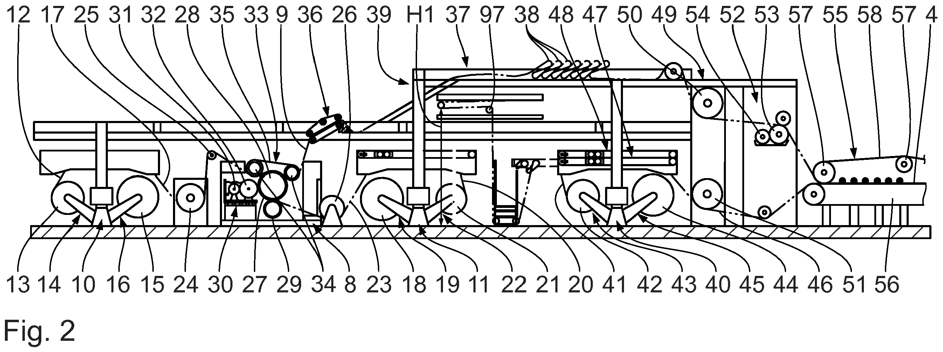

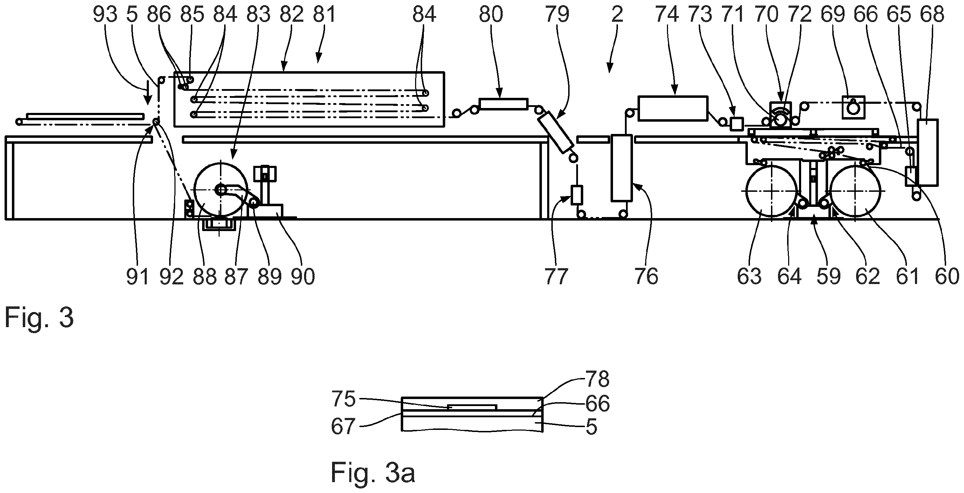

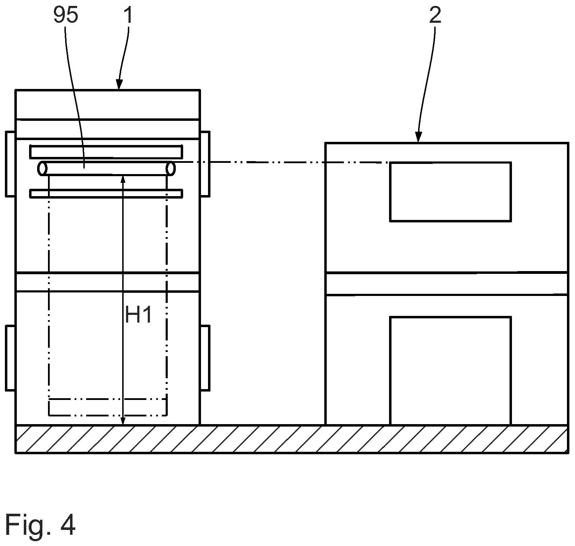

Bezug nehmend auf die Figuren 1 bis 4 umfasst eine Wellpappeanlage eine Wellpappe-Herstellungslinie 1 und eine Druckbahn-Drucklinie 2 sowie eine Druckbahn-Übergabeanordnung 3, über die die Druckbahn-Drucklinie 2 seitlich an die Wellpappe-Herstellungslinie 1 angeschlossen ist. In der Wellpappe-Herstellungslinie 1 ist eine endlose Wellpappebahn 4 herstellbar, während in der Druckbahn-Drucklinie 2 eine endlose bedruckte Druckbahn 5 fertigbar ist.

Die Wellpappe-Herstellungslinie 1 ist länglich. Sie erstreckt sich gerade entlang einer Wellpappe-Herstellungslinien-Längsrichtung 6. Die Druckbahn-Drucklinie 2 ist ebenfalls länglich ausgeführt. Sie erstreckt sich gerade entlang einer Druckbahn-Drucklinien-Längsrichtung 7. Die Druckbahn-Drucklinie 2 erstreckt sich parallel zu der Wellpappe-Herstellungslinie 1. Die Druckbahn-Drucklinie 2 und die Wellpappe-Herstellungslinie 1 erstrecken sich nebeneinander. Sie weisen senkrecht zu ihrer jeweiligen Längsrichtung 6 bzw. 7 einen Abstand A zueinander auf, der im Allgemeinen zwischen 1 m und 10 m, bevorzugter zwischen 2 m und 5 m, liegt. Die Druckbahn-Drucklinie 2 erstreckt sich so seitlich versetzt bzw. senkrecht versetzt zu der Wellpappe-Herstellungs-Längsrichtung 6 parallel zu der Wellpappe-Herstellungs-Längsrichtung 6.

Die Wellpappe-Herstellungslinie 1 umfasst eine Vorrichtung 8 zum Herstellen einer einseitig kaschierten, endlosen Wellpappebahn 9.

Der Vorrichtung 8 zum Herstellen einer einseitig kaschierten, endlosen Wellpappebahn 9 sind eine Deckbahn-Splicevorrichtung 10 und eine Materialbahn-Splicevorrichtung 11 vorgeordnet.

Die Deckbahn-Splicevorrichtung 10 umfasst zum Abrollen einer endlichen ersten Deckbahn 12 von einer ersten Deckbahnrolle 13 eine erste Abrolleinheit 14 und zum Abrollen einer endlichen zweiten Deckbahn von einer zweiten Deckbahnrolle 15 eine zweite Abrolleinheit 16. Die endliche erste Deckbahn 12 und zweite Deckbahn werden zum Bereitstellen einer endlosen Deckbahn 17 mittels einer nicht dargestellten Verbinde- und Schneideeinheit der Deckbahn-Splicevorrichtung 10 miteinander verbunden.

Die Materialbahn-Splicevorrichtung 11 ist entsprechend der Deckbahn-Splicevorrichtung 10 ausgebildet. Diese umfasst zum Abrollen einer endlichen ersten Materialbahn von einer ersten Materialbahnrolle 18 eine dritte Abrolleinheit 19 und zum Abrollen einer endlichen zweiten Materialbahn 20 von einer zweiten Materialbahnrolle 21 eine vierte Abrolleinheit 22. Die endliche erste Materialbahn und zweite Materialbahn 20 werden zum Bereitstellen einer endlosen Materialbahn 23 mittels einer Verbinde- und Schneideeinheit 97 der Materialbahn-Splicevorrichtung 11 miteinander verbunden.

Die endlose Deckbahn 17 wird über eine Heizrolle 24 und eine erste Umlenkrolle 25 der Vorrichtung 8 zum Herstellen einer einseitig kaschierten, endlosen Wellpappebahn 9 zugeführt, während die endlose Materialbahn 23 über eine zweite Umlenkrolle 26 der Vorrichtung 8 zum Herstellen einer einseitig kaschierten, endlosen Wellpappebahn 9 zugeführt wird.

Die Vorrichtung 8 zum Herstellen einer einseitig kaschierten, endlosen Wellpappebahn 9 umfasst zum Erzeugen einer eine Wellung aufweisenden, endlosen Wellbahn 27 aus der endlosen Materialbahn 23 eine drehbar gelagerte, erste Riffelwalze 28 und eine drehbar gelagerte, zweite Riffelwalze 29. Die Riffelwalzen 28, 29 bilden zum Durchführen und Riffeln der endlosen Materialbahn 23 einen Walzenspalt aus. Sie bilden zusammen eine Riffeleinrichtung. Die Drehachsen der beiden Riffelwalzen 28, 29 verlaufen parallel zueinander.

Zum Verbinden der endlosen Wellbahn 27 mit der endlosen Deckbahn 17 zu der einseitig kaschierten, endlosen Wellpappebahn 9 weist die Vorrichtung 8 zum Herstellen einer einseitig kaschierten, endlosen Wellpappebahn 9 eine Leimauftragseinrichtung 30 auf, die eine Leimdosierwalze 31, einen Leimbehälter (nicht dargestellt) und eine Leimauftragswalze 32 umfasst. Zum Durchführen und Beleimen der endlosen Wellbahn 27 bildet die Leimauftragswalze 32 mit der ersten Riffelwalze 28 einen Spalt aus. Der sich in dem Leimbehälter befindende Leim wird über die Leimauftragswalze 32 auf Spitzen der Wellung der endlosen Wellbahn 27 aufgetragen. Die Leimdosierwalze 31 liegt gegen die Leimauftragswalze 32 an und dient zum Ausbilden einer gleichmäßigen Leimschicht auf der Leimauftragswalze 32. Die endlose Deckbahn 17 wird anschließend mit der mit Leim aus dem Leimbehälter versehenen, endlosen Wellbahn 27 in der Vorrichtung 8 zum Herstellen einer einseitig kaschierten, endlosen Wellpappebahn 9 zusammengefügt.

Zum Anpressen der endlosen Deckbahn 17 gegen die mit Leim versehene, endlose Wellbahn 27, die wiederum bereichsweise an der ersten Riffelwalze 28 anliegt, hat die Vorrichtung 8 zum Herstellen einer einseitig kaschierten, endlosen Wellpappebahn 9 ein Anpressmodul 33. Das Anpressmodul 33 ist günstigerweise als Anpressbandmodul ausgeführt. Es ist oberhalb der ersten Riffelwalze 28 angeordnet. Das Anpressmodul 33 hat zwei Umlenkwalzen 34 sowie ein endloses Anpressband 35, das um die beiden Umlenkwalzen 34 geführt ist.

Die erste Riffelwalze 28 greift in einen zwischen den beiden Umlenkwalzen 34 vorliegenden Raum bereichsweise von unten ein, wodurch das Anpressband 35 durch die erste Riffelwalze 28 umgelenkt wird. Das Anpressband 35 drückt gegen die endlose Deckbahn 17, die wiederum gegen die mit Leim versehene, an der ersten Riffelwalze 28 anliegende, endlose Wellbahn 27 gepresst wird.

Zum Zwischenspeichern und Puffern der einseitig kaschierten, endlosen Wellpappebahn 9 wird diese über eine Hochtransporteinrichtung 36 einer Speichervorrichtung 37 zugeführt, wo diese Schleifen 38 ausbildet. Die Speichervorrichtung 37 ist von einem Grundgestell 39 getragen.

Ferner hat die Wellpappe-Herstellungslinie 1 eine Kaschierbahn-Splicevorrichtung 40, die zum Abrollen einer endlichen ersten Kaschierbahn 41 von einer ersten Kaschierbahnrolle 42 eine fünfte Abrolleinheit 43 und zum Abrollen einer endlichen zweiten Kaschierbahn von einer zweiten Kaschierbahnrolle 44 eine sechste Abrolleinheit 45 umfasst. Die erste Kaschierbahn 41 und die zweite Kaschierbahn werden zum Bereitstellen einer endlosen Kaschierbahn 46 mittels einer ersten Spliceeinrichtung 47 der Kaschierbahn-Splicevorrichtung 40 miteinander verbunden. Mittels der ersten Spliceeinrichtung 47 sind die endliche erste Kaschierbahn 41 und die endliche zweite Kaschierbahn aneinander splicebar bzw. an die endlose Kaschierbahn 46 splicebar.

Die Kaschierbahn-Splicevorrichtung 40 umfasst außerdem idealerweise eine zweite Spliceeinrichtung 48. Mittels der zweiten Spliceeinrichtung 48 ist die endlose Druckbahn 5 an die endlose Kaschierbahn 46 splicebar. Mittels der zweiten Spliceeinrichtung 48 ist die endlose Druckbahn 5 an die erste Kaschierbahn 41 oder die zweite Kaschierbahn splicebar.
In Bezug auf detailliertem Aufbau und genauer Funktion der Kaschierbahn-Splicevorrichtung 40 wird auf die DE 10 2015 218 321.1 verwiesen.

Stromabwärts zu der Speichervorrichtung 37 und der Kaschierbahn-Splicevorrichtung 40 hat die Wellpappe-Herstellungslinie 1 eine Vorheizanordnung 49, die zwei übereinander angeordnete Vorheizwalzen 50, 51 umfasst. Der Vorheizanordnung 49 werden die einseitig kaschierte, endlose Wellpappebahn 9 und die endlose Kaschierbahn 46 zugeführt, die beide teilweise die jeweilige Vorheizwalze 50 bzw. 51 umschlingen.

Stromabwärts zu der Vorheizanordnung 49 hat die Wellpappe-Herstellungslinie 1 ein Leimwerk 52 mit einer Beleimungswalze 53, die teilweise in ein Leimbad eingetaucht ist. An die Beleimungswalze 53 liegt eine Leim-Dosierwalze 54 an, um eine gleichmäßige Leimschicht auf der Beleimungswalze 53 auszubilden. Die einseitig kaschierte, endlose Wellpappebahn 9 befindet sich mit ihrer Wellbahn 27 mit der Beleimungswalze 53 in Kontakt, sodass die Wellung der Wellbahn 27 mit Leim aus dem Leimbad versehen wird.

Stromabwärts zu dem Leimwerk 52 hat die Wellpappe-Herstellungslinie 1 eine Heiz-Andrückvorrichtung 55 (nur teilweise dargestellt), die einen horizontal verlaufenden Heiztisch 56 umfasst. Benachbart zu dem Heiztisch 56 ist ein um Führungswalzen 57 geführter, endloser Andrückgurt 58 angeordnet. Zwischen dem Andrückgurt 58 und dem Heiztisch 56 ist ein Andrückspalt ausgebildet, durch den die einseitig kaschierte, endlose Wellpappebahn 9 und die endlose Kaschierbahn 46 unter Bildung der endlosen, zweiseitig kaschierten Wellpappebahn 4 geführt sind.

Stromabwärts zu der Heiz-Andrückvorrichtung 55 hat die Wellpappe-Herstellungslinie 1 günstigerweise eine Längsschneide-/Rillvorrichtung (nicht dargestellt) zum Längsschneiden und Rillen der endlosen Wellpappebahn 4.

Stromabwärts zu der Längschneide-/Rillvorrichtung hat die Wellpappe-Herstellungslinie 1 vorzugsweise eine Querschneidevorrichtung (nicht dargestellt) zum Querschneiden von Teil-Wellpappebahnen (nicht dargestellt), die durch die Längsschneide-/Rillvorrichtung aus der endlosen Wellpappebahn 4 erzeugt worden sind.

Der Querschneidevorrichtung ist vorzugsweise eine Weiche (nicht dargestellt) der Wellpappe-Herstellungslinie 1 nachgeordnet, um die Teil-Wellpappebahnen in verschiedene Ebenen zu fördern.

Der Weiche sind günstigerweise weitere Querschneidevorrichtungen (nicht dargestellt) der Wellpappe-Herstellungslinie 1 zum Querschneiden der Teil-Wellpappebahnen zu Wellpappebögen nachgeordnet.

Die Wellpappebögen werden vorzugsweise in Stapelvorrichtungen (nicht dargestellt) der Wellpappe-Herstellungslinie 1 aufeinander gestapelt.

Die Druckbahn-Drucklinie 2 umfasst eine Druckbahn-Splicevorrichtung 59, die wiederum zum Abrollen einer endlichen ersten Druckbahn 60 von einer ersten Druckbahnrolle 61 eine siebte Abrolleinheit 62 und zum Abrollen einer endlichen zweiten Druckbahn von einer zweiten Druckbahnrolle 63 eine achte Abrolleinheit 64 umfasst. Die endliche erste Druckbahn 60 und zweite Druckbahn werden zum Bereitstellen der endlosen Druckbahn 5 mittels einer Verbinde- und Schneideeinheit der Druckbahn-Splicevorrichtung 59 miteinander verbunden.

Stromabwärts zu der Druckbahn-Splicevorrichtung 59 hat die Druckbahn-Drucklinie 2 eine der endlosen Druckbahn 5 zugeordnete Vorbeschichtungs-Auftragsvorrichtung 65, die auf eine Außenseite 66 der endlosen Druckbahn 5 eine flächige Vorbeschichtung 67 aufbringt. Die flächige Vorbeschichtung 67 bedeckt insbesondere im Wesentlichen vollflächig die endlose Druckbahn 5 auf ihrer Außenseite 66, die bei der fertigen Wellpappebahn 4 auch eine Außenseite bildet.

Stromabwärts zu der Vorbeschichtungs-Auftragsvorrichtung 65 hat die Druckbahn-Drucklinie 2 eine der endlosen Druckbahn 5 zugeordnete Vorbeschichtungs-Trocknungsvorrichtung 68, die die außenseitig mit der Vorbeschichtung 67 versehene, endlose Druckbahn 5 bzw. die Vorbeschichtung 67 trocknet.

Stromabwärts zu der Vorbeschichtungs-Trocknungsvorrichtung 68 hat die Druckbahn-Drucklinie 2 ein der endlosen Druckbahn 5 zugeordnetes Zugwerk 69, das die endlose Druckbahn 5 fördert bzw. von der Druckbahn-Splicevorrichtung 59 weg zieht.

Stromabwärts zu dem Zugwerk 69 hat die Druckbahn-Drucklinie 2 eine der endlosen Druckbahn 5 zugeordnete Corona-Vorbehandlungsvorrichtung 70. Die Corona-Vorbehandlungsvorrichtung 70 umfasst eine Corona-Trägerwalze 71 und mindestens eine benachbart zu dieser angeordnete Elektrode 72. Um die Corona-Trägerwalze 71 wird die endlose Druckbahn 5 geführt. Die endlose Druckbahn 5 läuft dabei durch einen Spalt, der durch die Corona-Trägerwalze 71 und die mindestens eine Elektrode 72 gebildet ist. Durch die Corona-Vorbehandlungsvorrichtung 70 wird die Außenseite 66 der endlosen Druckbahn 5 einer elektrischen CoronaEntladung ausgesetzt, was zu einer Oxidation deren Oberfläche führt. Dies erfolgt insbesondere bei einer gestrichenen, endlosen Druckbahn 5. Dies ergibt höhere Punktzuwächse bei einem Farbauftrag bzw. bei einem Bedrucken. Die Haftung einer Druckfarbe auf der endlosen Druckbahn 5 wird so verbessert.

Stromabwärts zu der Corona-Vorbehandlungsvorrichtung 70 hat die Druckbahn-Drucklinie 2 eine der endlosen Druckbahn 5 zugeordnete Reinigungsvorrichtung 73, die die endlose Druckbahn 5 zumindest außenseitig reinigt.

Stromabwärts zu der Reinigungsvorrichtung 73 hat die Druckbahn-Drucklinie 2 eine der endlosen Druckbahn 5 zugeordnete Inkjet-Druckvorrichtung 74, die außenseitig auf die endlose Druckbahn 5 bzw. auf die getrocknete Vorbeschichtung 67 mindestens einen Aufdruck 75 aufdruckt. Die Vorbeschichtung 67 befindet sich somit zwischen dem mindestens einen Aufdruck 75 und der Druckbahn 5. Der mindestens eine Aufdruck 75 ist günstigerweise ein wasserbasierter Farbaufdruck.

Stromabwärts zu der Inkjet-Druckvorrichtung 74 hat die Druckbahn-Drucklinie 2 eine der endlosen Druckbahn 5 zugeordnete Inkjetdruck-Trocknungsvorrichtung 76, die die bedruckte endlose Druckbahn 5 bzw. deren mindestens einen Aufdruck 75 trocknet.

Stromabwärts zu der Inkjetdruck-Trocknungsvorrichtung 76 hat die Druckbahn-Drucklinie 2 ein der endlosen Druckbahn 5 zugeordnetes Lackwerk 77 zum vollflächigen Auftragen mindestens einer transparenten Überlackschicht 78 außenseitig auf die endlose Druckbahn 5. Der mindestens eine Aufdruck 75 befindet sich so zwischen der mindestens einen Überlackschicht 78 und der Vorbeschichtung 67. Die mindestens eine Überlackschicht 78 bedeckt den mindestens einen Aufdruck 75 vollflächig und liegt an diesem direkt an. Sie ist günstigerweise durch Mattlack gebildet, der auf Wasser basiert und auch als Wasserlack bezeichnet wird.

Stromabwärts zu dem Lackwerk 77 hat die Druckbahn-Drucklinie 2 eine der endlosen Druckbahn 5 zugeordnete Lack-Trocknungsvorrichtung 79, die die lackierte endlose Druckbahn 5 bzw. deren mindestens eine Überlackschicht 78 trocknet.

Stromabwärts zu der Lack-Trocknungsvorrichtung 79 hat die Druckbahn-Drucklinie 2 eine der endlosen Druckbahn 5 zugeordnete Rückbefeuchtungsvorrichtung 80, die die endlose Druckbahn 5 zumindest außenseitig bzw. auf der mit der einseitig kaschierten Wellpappebahn zu verleimenden Seite befeuchtet.

Die Druckbahn-Drucklinie 2 weist außerdem eine Druckbahn-Speichervorrichtung 81 zum Speichern der, insbesondere bedruckten, Druckbahn 5 auf. Die Druckbahn-Speichervorrichtung 81 ist stromabwärts zu der Rückbefeuchtungsvorrichtung 80 angeordnet.

Die Druckbahn-Speichervorrichtung 81 wiederum umfasst eine dynamische Druckbahn-Speichereinrichtung 82 und eine Druckbahn-Aufwickeleinrichtung 83, die der dynamischen Druckbahn-Speichereinrichtung 82 in Bezug auf eine Förderrichtung 93 der Druckbahn 5 nachgeordnet ist.

In der dynamischen Druckbahn-Speichereinrichtung 82 ist die Druckbahn 5 im Wesentlichen um mehrere Umlenkrollen 84 mäanderartig geführt. Mindestens eine der Umlenkrollen 84 ist senkrecht zu ihrer Drehachse verlagerbar, sodass die Länge der in der dynamischen Druckbahn-Speichereinrichtung 82 gespeicherten Druckbahn 5 dynamisch veränderbar ist. In der dynamischen Druckbahn-Speichereinrichtung 82 ist ausgangsseitig ein Zugwerk 85 angeordnet, das mindestens eine Zugwalze 86 zum Ziehen der Druckbahn 5 in Richtung auf die Druckbahn-Übergabeanordnung 3 umfasst.

Die der dynamischen Druckbahn-Speichereinrichtung 82 nachgeordnete Druckbahn-Aufwickeleinrichtung 83 umfasst zum Aufwickeln der, insbesondere bedruckten, Druckbahn 5 eine in Lagerarmen 87 drehbar gelagerte Druckbahn-Aufwickelrolle 88. Günstigerweise sind die Lagerarme 87 um eine Schwenkachse 89 verschwenkbar. Die Lagerarme 87 sind an einem Druckbahn-Aufwickelgestell 90 schwenkbar gelagert. Die Druckbahn 5 muss die dynamischen Druckbahn-Speichereinrichtung 82 durchlaufen haben, damit diese in der Druckbahn-Aufwickeleinrichtung 83 aufwickelbar ist.

Zwischen der dynamischen Druckbahn-Speichereinrichtung 82 und der Druckbahn-Aufwickeleinrichtung 83 ist eine Druckbahn-Weichenanordnung 91 angeordnet, die imstande ist, die Druckbahn 5 zu der Druckbahn-Aufwickeleinrichtung 83 oder an der Druckbahn-Aufwickeleinrichtung 83 vorbei zu der Druckbahn-Übergabeanordnung 3 zu führen. Die Druckbahn-Weichenanordnung 91 umfasst dafür günstigerweise mindestens eine drehbar gelagerte Weichenstange 92, die sich dort senkrecht zu der Förderrichtung 93 der Druckbahn 5 erstreckt. Wenn die Druckbahn 5 zu der Druckbahn-Aufwickeleinrichtung 83 geführt wird, wird die Druckbahn 5 bei der Druckbahn-Weichenanordnung 91 im Wesentlichen nicht bzw. nur geringfügig von der Weichenstange 92 umgelenkt. Wenn die Druckbahn 5 dagegen zu der Druckbahn-Übergabeanordnung 3 geführt wird und so die Druckbahn-Aufwickeleinrichtung 83 passiert, wird die endlose Druckbahn 5 bei der Druckbahn-Weichenanordnung 91 um etwa 90° umgelenkt.

Stromabwärts zu der Druckbahn-Weichenanordnung 91 ist die Druckbahn-Übergabeanordnung 3 angeordnet, die eine erste Umlenkstange 94 und eine zweite Umlenkstange 95 umfasst.

Die erste Umlenkstange 94 ist benachbart zu der Druckbahn-Weichenanordnung 91 angeordnet. Diese erstreckt sich horizontal und schließt mit der dort vorliegenden Förderrichtung 93 der Druckbahn 5 einen Winkel w1 ein, der 45° beträgt. Bei der ersten Umlenkstange 94 wird die Druckbahn 5 um 90° umgelenkt und um 180° gewendet. Die Druckbahn 5 verläuft in der Druckbahn-Übergabeanordnung 3 so senkrecht zu der Druckbahn-Drucklinien-Längsrichtung 7 bzw. zu der Wellpappe-Herstellungslinien-Längsrichtung 6. Die erste Umlenkstange 94 ist auf dem Grundgestell 39 angeordnet.

Die zweite Umlenkstange 95 verläuft parallel zu der ersten Umlenkstange 94. Die zweite Umlenkstange 95 befindet sich innerhalb der Wellpappe-Herstellungslinie 1. Durch die zweite Umlenkstange 95 wird die Druckbahn 5 um 90° in Richtung der Wellpappe-Herstellungs-Längsrichtung 6 umgelenkt und um 180° gewendet. Die Druckbahn 5 wird stromabwärts zu der zweiten Umlenkstange 95 in Richtung der Förderrichtung 96 der benachbarten, einseitig kaschierten, endlosen Wellpappebahn 9 gefördert. Die zweite Umlenkstange 95 ist auf dem Grundgestell 39 angeordnet. Sie ist benachbart zu der Speichervorrichtung 37 angeordnet.

Die beiden Umlenkstangen 94, 95 liegen in einer gemeinsamen horizontalen Ebene. Sie sind in einer im Wesentlichen identischen vertikalen Höhe H1 zu einem Untergrund oberhalb der Verbinde- und Schneideeinheit 97 der Materialbahn-Splicevorrichtung 11 angeordnet.

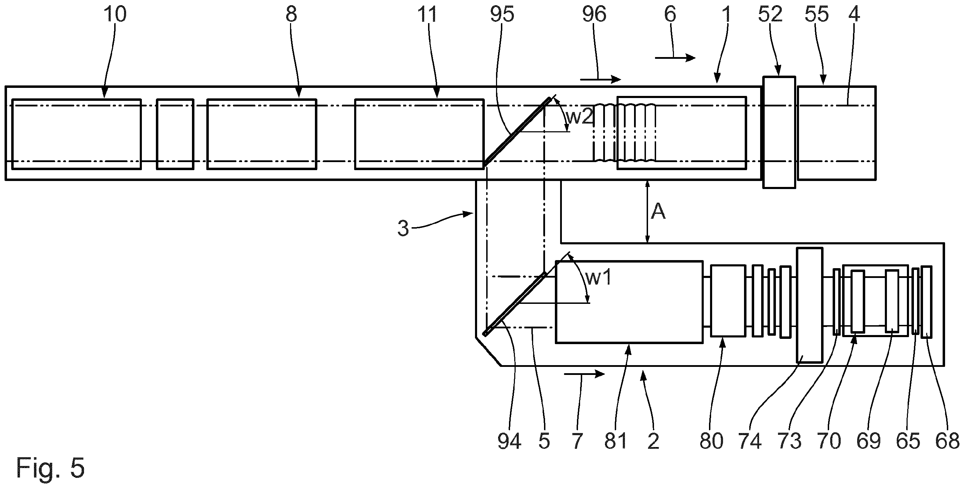

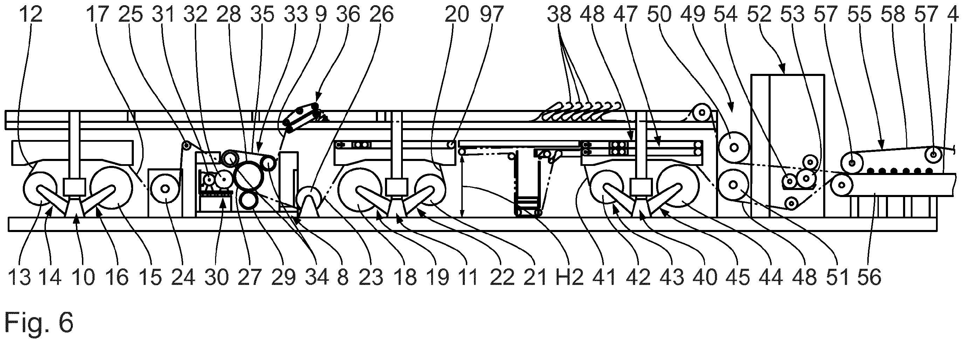

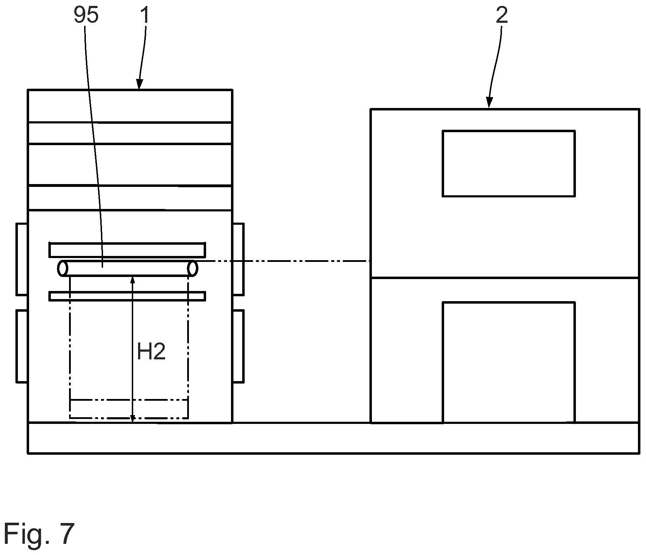

Nachfolgend wird unter Bezugnahme auf die Figuren 5 bis 7 eine zweite Ausführungsform beschrieben. Im Gegensatz zu der vorherigen Ausführungsform, auf die verwiesen wird, sind die Umlenkstangen 94, 95 tiefer in einer vertikalen Höhe H2 zu dem Untergrund angeordnet. Sie finden sich in Höhe der Spliceeinrichtungen 47, 48 der Kaschierbahn-Splicevorrichtung 40. Ansonsten bestehen keine wesentlichen Unterschiede.

## Patentansprüche

1. Wellpappeanlage, mit
a) einer Druckbahn-Drucklinie (2) zum Herstellen einer bedruckten Druckbahn (5), umfassend
i) eine Druckbahn-Abrollvorrichtung (59) zum Abrollen einer zu bedruckenden Druckbahn (5), und
ii) eine Druckvorrichtung (74) zum Bedrucken der Druckbahn (5),
b) einer Wellpappe-Herstellungslinie (1) zum Herstellen einer Wellpappebahn (4), umfassend
i) eine Deckbahn-Abrollvorrichtung (10) zum Abrollen einer Deckbahn (17),
ii) eine Materialbahn-Abrollvorrichtung (11) zum Abrollen einer zu wellenden Materialbahn (23),
iii) eine Vorrichtung (8) zum Herstellen einer einseitig kaschierten Wellpappebahn (9) aus der Deckbahn (17) und der Materialbahn (23), und
iv) ein Leimwerk (52) zum Auftragen von Leim auf die einseitig kaschierte Wellpappebahn (9),
c) einer der Druckbahn-Drucklinie (2) nachgeordnete und sich an die Wellpappe-Herstellungslinie (1) anschließende Druckbahn-Übergabeanordnung (3) zum Übergeben der Druckbahn (5) an die Wellpappe-Herstellungslinie (1) und Verwenden als Kaschierbahn,
**dadurch gekennzeichnet, dass**
d) die Wellpappe-Herstellungslinie (1) außerdem eine Kaschierbahn-Abrollvorrichtung (40) zum Abrollen einer Kaschierbahn (46) aufweist, und
e) die einseitig kaschierte Wellpappebahn (9) mit der Kaschierbahn (46) der Wellpappe-Herstellungslinie (1) oder der Druckbahn (5) verbindbar ist.

2. Wellpappeanlage nach Anspruch 1, **dadurch gekennzeichnet, dass** die Druckbahn-Drucklinie (2) und die Wellpappe-Herstellungslinie (1) zumindest bereichsweise parallel und seitlich versetzt zueinander verlaufen.

3. Wellpappeanlage nach Anspruch 1 oder 2, **dadurch gekennzeichnet, dass** die Druckbahn-Drucklinie (2) die Druckbahn (5) gegenläufig zu der in der Wellpappe-Herstellungslinie (1) benachbart geförderten, einseitig kaschierten Wellpappebahn (9) fördert.

4. Wellpappeanlage nach einem der vorherigen Ansprüche, **dadurch gekennzeichnet, dass** die Wellpappe-Herstellungslinie (1) stromabwärts zu der Vorrichtung (8) zum Herstellen einer einseitig kaschierten Wellpappebahn (9) eine Speichervorrichtung (37) zum Speichern der einseitig kaschierten Wellpappebahn (9) umfasst.

5. Wellpappeanlage nach Anspruch 4, **dadurch gekennzeichnet, dass** die Druckbahn-Übergabeanordnung (3) benachbart zu der Speichervorrichtung (37) an die Wellpappe-Herstellungslinie (1) angeschlossen ist.

6. Wellpappeanlage nach einem der vorherigen Ansprüche, **dadurch gekennzeichnet, dass** die Druckbahn-Übergabeanordnung (3) oberhalb der Materialbahn-Abrollvorrichtung (11) an die Wellpappe-Herstellungslinie (1) angeschlossen ist.

7. Wellpappeanlage nach einem der Ansprüche 1 bis 5, **dadurch gekennzeichnet, dass** die Druckbahn-Übergabeanordnung (3) in etwa auf vertikaler Höhe einer Verbinde- und Schneideeinheit (97) der Materialbahn-Abrollvorrichtung (11) an die Wellpappe-Herstellungslinie (1) angeschlossen ist.

8. Wellpappeanlage nach einem der vorherigen Ansprüche, **dadurch gekennzeichnet, dass** sich die Druckbahn-Übergabeanordnung (3) zumindest bereichsweise im Wesentlichen senkrecht zu der Wellpappe-Herstellungslinie (1) und/oder zu der Druckbahn-Drucklinie (2) erstreckt.

9. Wellpappeanlage nach einem der vorherigen Ansprüche, **dadurch gekennzeichnet, dass** die Druckbahn-Übergabeanordnung (3) eine Umlenkanordnung zum Umlenken der Druckbahn (5) aus ihrer Förderrichtung in eine Förderrichtung (96) der einseitig kaschierten Wellpappebahn (9) bei der Druckbahn-Übergabeanordnung (3) umfasst, wobei die Umlenkanordnung vorzugsweise die Druckbahn (5) um im Wesentlichen 180° umlenkt.

10. Wellpappeanlage nach einem der vorherigen Ansprüche, **dadurch gekennzeichnet, dass** die Druckbahn-Drucklinie (2) stromabwärts zu der Druckvorrichtung (74) eine Druckbahn-Speichervorrichtung (81) zum Speichern der Druckbahn (5) umfasst.

11. Wellpappeanlage nach Anspruch 10, **dadurch gekennzeichnet, dass** die Druckbahn-Speichervorrichtung (81) eine Druckbahn-Aufwickeleinrichtung (83) zum Aufwickeln der Druckbahn (5) umfasst.

12. Wellpappeanlage nach Anspruch 10 oder 11, **dadurch gekennzeichnet, dass** die Druckbahn-Speichervorrichtung (81) eine dynamische Druckbahn-Speichereinrichtung (82) zum Speichern der Druckbahn (5) umfasst.

13. Wellpappeanlage nach Anspruch 11 und 12, **dadurch gekennzeichnet, dass** zwischen der Druckbahn-Aufwickeleinrichtung (83) und der dynamischen Druckbahn-Speichereinrichtung (82) eine Druckbahn-Weichenanordnung (92) zum Führen der Druckbahn (5) zu der Druckbahn-Aufwickeleinrichtung (83) oder zu der Wellpappe-Herstellungslinie (1) angeordnet ist.

14. Wellpappeanlage nach einem der vorherigen Ansprüche, **dadurch gekennzeichnet, dass** die Kaschierbahn-Abrollvorrichtung (40) als Mehrfach-Splicevorrichtung ausgebildet ist, die eine erste Spliceeinrichtung (47) zum Splicen einer ersten Kaschierbahn (41) und einer zweiten Kaschierbahn aneinander und eine zweite Spliceeinrichtung (48) zum Splicen der Druckbahn (5) an die erste Kaschierbahn (41) oder zweite Kaschierbahn umfasst.

15. Wellpappeanlage nach Anspruch 14, **dadurch gekennzeichnet, dass** die Druckbahn-Drucklinie (2) stromaufwärts zu der Kaschierbahn-Abrollvorrichtung (40) an die Kaschierbahn-Abrollvorrichtung (40) zum Übergeben der Druckbahn (5) an die Kaschierbahn-Abrollvorrichtung (40) angeschlossen ist.

## Claims

1. Corrugated-board machine, with
a) a print-web printing line (2) for manufacturing a printed print-web (5), comprising
i) a print-web unrolling device (59) for unrolling a print-web (5) to be printed, and
ii) a printing device (74) for printing the print-web (5),
b) a corrugated-board manufacturing line (1) for manufacturing a corrugated-board web (4), comprising
i) a cover-web unrolling device (10) for unrolling a cover-web (17),
ii) a material-web unrolling device (11) for unrolling a material-web (23) to be corrugated,
iii) a device (8) for manufacturing a corrugated-board web (9) laminated on one side made from the cover-web (17) and the material web (23), and
iv) a gluing-unit (52) for applying glue to the corrugated-board web (9) laminated on one side,
c) a print-web transfer arrangement (3) disposed downstream of the print-web printing line (2) and adjoining the corrugated-board manufacturing line (1) for transferring the print-web (5) to the corrugated-board manufacturing line (1) and using as a laminated web,
**characterized in that**
d) the corrugated-board manufacturing line (1) further has a lamination-web unrolling device (40) for unrolling a lamination-web (46), and
e) the corrugated-board web (9) laminated on one side is connectable to the lamination-web (46) of the corrugated-board manufacturing line (1) or the print-web (5).

2. Corrugated-board machine according to claim 1, **characterised in that** the print-web printing line (2) and the corrugated-board manufacturing line (1) extend at least in regions parallel and laterally offset relative to one another.

3. Corrugated-board machine according to claim 1 or 2, **characterised in that** the print-web printing line (2) conveys the print-web (5) in contrary motion to the corrugated-board web (9) laminated on one side and conveyed adjacently in the corrugated-board manufacturing line (1).

4. Corrugated-board machine according to one of the preceding claims, **characterised in that** the corrugated-board manufacturing line (1) comprises, downstream from the device (8) for manufacturing a corrugated-board web (9) laminated on one side, a storage device (37) for storing the corrugated-board web (9) laminated on one side.

5. Corrugated-board machine according to claim 4, **characterised in that** the print-web transfer arrangement (3) is connected adjacent to the storage device (37) to the corrugated-board manufacturing line (1).

6. Corrugated-board machine according to one of the preceding claims, **characterised in that** the print-web transfer arrangement (3) is connected above the material-web unrolling device (11) to the corrugated-board manufacturing line (1).

7. Corrugated-board machine according to one of claims 1 to 5, **characterised in that** the print-web transfer arrangement (3) is connected at approximately a vertical height of a connecting and cutting unit (97) of the material-web unrolling device (11) to the corrugated-board manufacturing line (1).

8. Corrugated-board machine according to one of the preceding claims, **characterised in that** the print-web transfer arrangement (3) extends at least in regions substantially perpendicular to the corrugated-board manufacturing line (1) and/or to the print-web printing line (2).

9. Corrugated-board machine according to one of the preceding claims, **characterised in that** the print-web transfer arrangement (3) comprises a deflection arrangement for deflecting the print-web (5) from its conveying direction into a conveying direction (96) of the corrugated-board web (9) at the print-web transfer arrangement (3), wherein the deflection arrangement preferably deflects the print-web (5) through substantially 180°.

10. Corrugated-board machine according to one of the preceding claims, **characterised in that** print-web printing line (2) comprises, downstream of the printing device (74), a print-web storage device (81) for storing the print-web (5).

11. Corrugated-board machine according to claim 10, **characterised in that** the print-web storage device (81) comprises a print-web winding-on unit (83) for winding on the print-web (5).

12. Corrugated-board machine according to claim 10 or 11, **characterised in that** the print-web storage device (81) comprises a dynamic print-web storage unit (82) for storing the print-web (5).

13. Corrugated-board machine according to claim 11 and 12, **characterised in that** a print-web distributing-guide arrangement (92) for guiding the print-web (5) to the print-web winding-on unit (83) or to the corrugated-board manufacturing line (1) is arranged between the print-web winding on unit (83) and the dynamic print-web storage unit (82).

14. Corrugated-board machine according to one of the preceding claims, **characterised in that** the lamination-web unrolling device (40) is constituted as a multiple-splicing device, which comprises a first splicing unit (47) for splicing a first laminated web (41) and a second laminated web to one another and a second splicing unit (48) for splicing the print-web (5) to the first laminated web (41) or second laminated web.

15. Corrugated-board machine according to claim 14, **characterised in that** the print-web printing line (2) is connected upstream of the lamination-web unrolling device (40) to the lamination-web unrolling device (40) for transferring the print-web (5) to the lamination-web unrolling device (40).

## Revendications

1. Installation de production de carton ondulé, comprenant
a) une ligne d'impression de bande d'impression (2) destiné à produire une bande d'impression imprimée (5), comprenant
i) un dispositif de déroulement de bande d'impression (59) destiné à dérouler une bande d'impression (5) à imprimer, et
ii) un dispositif d'impression (74) destiné à imprimer la bande d'impression (5),
b) une ligne de production de carton ondulé (1) destinée à produire une bande de carton ondulé (4), comprenant
i) un dispositif de déroulement de bande supérieure (10) destiné à dérouler une bande supérieure (17),
ii) un dispositif de déroulement de bande de matière (11) destiné à dérouler une bande de matière (23) à onduler,
iii) un dispositif (8) destiné à produire une bande de carton ondulé (9) contrecollée sur une seule face à partir de la bande supérieure (17) et de la bande de matière (23), et
iv) une unité d'encollage (52) destiné à appliquer de la colle sur la bande de carton ondulé (9) contrecollée sur une seule face,
c) un système de transfert de bande d'impression (3) disposé en aval de la ligne d'impression de bande d'impression (2), faisant suite à la ligne de production de carton ondulé (1) et destiné à transférer la bande d'impression (5) sur la ligne de production de carton ondulé (1) et à l'utiliser comme bande de contre(collage,
**caractérisée en ce que**
d) la ligne de production de carton ondulé (1) comprend en outre un dispositif de déroulement de bande de contre-collage (40) destiné à dérouler une bande de contre-collage (46), et
e) la bande de carton ondulé (9) contrecollée sur une seule face peut être reliée à la bande de contre-collage (46) de la ligne de production de carton ondulé (1) ou de la bande d'impression (5).

2. Installation de production de carton ondulé selon la revendication 1, **caractérisée en ce que** la ligne d'impression de bande d'impression (2) et la ligne de production de carton ondulé (1) sont au moins partiellement parallèles et décalées latéralement l'une de l'autre.

3. Installation de production de carton ondulé selon la revendication 1 ou 2, **caractérisée en ce que** la ligne d'impression de bande d'impression (2) achemine la bande d'impression (5) dans le sens opposé à celui de la bande de carton ondulé (9), contrecollée sur une seule face, qui a été acheminée de manière adjacente dans la ligne de production de carton ondulé (1).

4. Installation de production de carton ondulé selon l'une des revendications précédentes, **caractérisée en ce que** la ligne de production de carton ondulé (1) comporte, en aval du dispositif (8) destiné à produire une bande de carton ondulé (9) contrecollée sur une seule face, un dispositif de stockage (37) destiné à stocker la bande de carton ondulé (9) contrecollée sur une seule face.

5. Installation de production de carton ondulé selon la revendication 4, **caractérisée en ce que** le dispositif de transfert de bande d'impression (3) est raccordé à la ligne de production de carton ondulé (1) de manière adjacente au dispositif de stockage (37).

6. Installation de production de carton ondulé selon l'une des revendications précédentes, **caractérisée en ce que** le système de transfert de bande d'impression (3) est raccordé à la ligne de production de carton ondulé (1) au-dessus du dispositif de déroulement de bande de matière (11).

7. Installation de production de carton ondulé selon l'une des revendications 1 à 5, **caractérisée en ce que** le système de transfert de bande d'impression (3) est raccordé à la ligne de production de carton ondulé (1) approximativement à une hauteur verticale d'une unité de raccordement et de coupe (97) du dispositif de déroulement de bande de matière (11).

8. Installation de production de carton ondulé selon l'une des revendications précédentes, **caractérisée en ce que** le système de transfert de bande d'impression (3) s'étend au moins par endroits sensiblement perpendiculairement à la ligne de production de carton ondulé (1) et/ou à la ligne d'impression de bande d'impression (2).

9. Installation de production de carton ondulé selon l'une des revendications précédentes, **caractérisée en ce que** le système de transfert de bande d'impression (3) comprend un système de déviation destiné à dévier la bande d'impression (5) de sa direction d'acheminement dans une direction d'acheminement (96) de la bande de carton ondulé (9) contrecollée sur une seule face dans le système de transfert de bande d'impression (3), le système de déviation déviant de préférence la bande d'impression (5) sensiblement de 180°.

10. Installation de production de carton ondulé selon l'une des revendications précédentes, **caractérisée en ce que** la ligne d'impression de bande d'impression (2) comprend, en aval du dispositif d'impression (74), un dispositif de stockage de bande d'impression (81) destiné à stocker la bande d'impression (5).

11. Installation de production de carton ondulé selon la revendication 10, **caractérisée en ce que** le dispositif de stockage de bande d'impression (81) comprend un moyen d'enroulement de bande d'impression (83) destiné à enrouler la bande d'impression (5).

12. Installation de production de carton ondulé selon la revendication 10 ou 11, **caractérisée en ce que** le dispositif de stockage de bande d'impression (81) comprend un moyen de stockage de bande d'impression dynamique (82) destiné à stocker la bande d'impression (5).

13. Installation de production de carton ondulé selon les revendications 11 et 12, **caractérisée en ce qu'**un système d'aiguillage de bande d'impression (92), destiné à guider la bande d'impression (5) jusqu'au moyen d'enroulement de bande d'impression (83) ou jusqu'à la ligne de production de carton ondulé (1), est disposé entre le moyen d'enroulement de bande d'impression (83) et le moyen de stockage de bande d'impression dynamique (82).

14. Installation de production de carton ondulé selon l'une des revendications précédentes, **caractérisée en ce que** le dispositif de déroulement de bande de contre-collage (40) est conçu comme un dispositif de raccordements multiples comprenant un premier moyen de raccordement (47) destiné à raccorder une première bande de contre-collage (41) et une deuxième bande de contre-collage et un deuxième moyen de raccordement (48) destiné à raccorder la bande d'impression (5) sur la première bande de contre-collage (41) ou à la deuxième bande de contre-collage.

15. Installation de production de carton ondulé selon la revendication 14, **caractérisée en ce que** la ligne d'impression de bande d'impression (2) est raccordée, en amont du dispositif de déroulement de bande de contre-collage (40), au dispositif de déroulement de bande de contre-collage (40), pour transmettre la bande d'impression (5) au dispositif de déroulement de bande de contre-collage (40).
